# EUROPEAN PATENT SPECIFICATION

(11) **EP 4 575 388 B1**
(45) Date of publication and mention of the grant of the patent: **21.10.2026**
(21) Application number: 23218104.0
(22) Date of filing: 19.12.2023
(51) Int. Cl.: G01B 11/275

(54) **ARRANGEMENT FOR DETERMINING WHEEL ALIGNMENT**
ANORDNUNG ZUR BESTIMMUNG DER RADAUSRICHTUNG
DISPOSITIF POUR DÉTERMINER L'ALIGNEMENT DE ROUES

(43) Date of publication of application: 25.06.2025
(73) Proprietor: VOLVO TRUCK CORPORATION, 405 08 Göteborg (SE)
(72) Inventor: Mani, Boopathy, 422 41 Göteborg (SE)
(74) Representative: Kransell & Wennborg KB

(56) References cited:
- KR-A- 20110 051 512
- KR-B1- 102 365 901
- US-A1- 2010 094 504

## Description

### TECHNICAL FIELD

The disclosure relates generally to wheel alignment in vehicles. In particular aspects, the disclosure relates to an onboard arrangement and system for determining wheel alignment of a vehicle, and a method for adjusting wheel alignment of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A proper wheel alignment of steerable wheels of a motor vehicle is important to avoid uneven tyre wear and that the vehicle starts pulling to the side, as well as to keep the fuel consumption of the vehicle as low as possible. If the wheel alignment is incorrect, it is desirable to detect this promptly to avoid the above-mentioned problems. However, checking that the wheel alignment is correct is a process that usually requires the use of offboard equipment and must be carried out in a workshop. The wheel alignment may be checked regularly when the vehicle is brought into service. However, there is a risk that problems with wheel alignment may arise between service occasions, leading to reduced vehicle performance. An experienced driver may notice that the vehicle starts to pull to the side, or that the fuel consumption increases, but in order to confirm that the wheel alignment is off, the vehicle must be taken to a workshop. KR20110051512A discloses a device for measuring dynamic wheel alignment by using a specific circular pattern inscribed on the tire and a CCD camera.

### SUMMARY

According to a first aspect of the disclosure, an on-board arrangement for determining wheel alignment of a steerable wheel mounted on an axle of a vehicle is provided. The steerable wheel is mounted to the axle by means of a steering knuckle. The arrangement comprises:
- a pattern provided on a first one of the steering knuckle and the axle, wherein the pattern defines a tolerance zone for wheel alignment of the steerable wheel,
- a sensor assembly mounted on a second one of the steering knuckle and the axle, the sensor assembly being configured to detect the pattern and collect sensor data relating to the detected pattern, wherein the collected sensor data are indicative of whether the wheel alignment is within the tolerance zone.

The first aspect of the disclosure may seek to provide an in at least some aspect improved arrangement for determining wheel alignment, which arrangement is provided onboard the vehicle. The arrangement is intended for use when the vehicle is not being steered, i.e., for calibration purposes only. A technical benefit may include that the driver is able to check the vehicle alignment between service occasions, without bringing the vehicle into a workshop.

Optionally in some examples, including in at least one preferred example, the sensor assembly is mounted on the axle and the pattern is provided on the steering knuckle. A technical benefit may include less complex circuitry when working is used to connect the sensor assembly to an electronic control unit of the vehicle. A more robust arrangement may thereby be achieved. In other example embodiments, the sensor assembly may be mounted on the steering knuckle and the pattern may be provided on the axle.

Optionally in some examples, including in at least one preferred example, the sensor assembly comprises an emitter configured to emit an electromagnetic radiation beam toward the pattern, and a detector configured to collect the sensor data by detecting a return signal arising as the electromagnetic radiation beam interacts with the pattern. A technical benefit may include fast and accurate detection of whether the wheel alignment is within the tolerance zone.

Optionally in some examples, including in at least one preferred example, the sensor assembly comprises a pointer configured to project a light beam onto the pattern, and a camera configured to collect the sensor data by capturing at least one image of the pattern and the projected light beam. A technical benefit may include fast and accurate detection of whether the wheel alignment is within the tolerance zone by using a simple visual pattern. Image analysis may be used to determine whether the projected light beam overlaps with the visual pattern in such a way that the wheel alignment is within the tolerance zone or not.

Optionally in some examples, including in at least one preferred example, the pointer is a laser pointer. A technical benefit may include that a sharp and distinct projection is achieved, enabling a precise detection of whether the wheel alignment is within the tolerance zone.

Optionally in some examples, including in at least one preferred example, the pattern is a visual pattern comprising an outer border, and wherein the sensor data is indicative of the wheel alignment being within the tolerance zone when the projected light beam is within the outer border. A technical benefit may include that the tolerance zone can be well-defined.

Optionally in some examples, including in at least one preferred example, the sensor assembly comprises a proximity sensor configured to detect the pattern and collect sensor data relating to the detected pattern, and wherein the pattern is a three-dimensional pattern that enables detection of the tolerance zone by the proximity sensor. A technical benefit may include that a robust arrangement may be achieved, which is less sensitive to dirt that may hide a purely visual pattern.

Optionally in some examples, including in at least one preferred example, the pattern comprises at least one serration and/or at least one protrusion defining an outer border of the tolerance zone. A technical benefit may include an accurate detection of whether the wheel alignment is within the tolerance zone.

Optionally in some examples, including in at least one preferred example, the tolerance zone defines at least one of a first tolerance range for a toe angle and a second tolerance range for a camber angle. For example, the pattern may define a tolerance zone in the form of a square or a circle, having the same tolerance ranges for the toe and camber angles. In other examples, the pattern may define a tolerance zone in the form of a rectangle or an oval, having different tolerance ranges for the toe and camber angles, respectively. A technical benefit may include an accurate determination of both the toe angle and the camber angle.

Optionally in some examples, including in at least one preferred example, the pattern may also be configured such that it can be determined whether a steering angle, such as a total steering angle, is within predefined limits. For example, it can be configured such that it can be detected whether maximum steering angles for right- and left turns, respectively, are within predefined limits. This may be determined when the steerable wheel is turned to its respective extreme positions.

Optionally in some examples, including in at least one preferred example, the arrangement further comprises a user interface configured to present information relating to the collected sensor data to a user. A technical benefit may include that the user, such as the driver of the vehicle, is able to quickly detect whether the wheel alignment is within the tolerance zone.

Optionally in some examples, including in at least one preferred example, the user interface comprises a display configured to present the information as an image of the detected pattern and the light beam projected onto the pattern. The image may be the image captured by the camera, in the case where a camera is used as the sensor. A technical benefit may include that no image analysis is needed, since the driver can easily see from the image whether the wheel alignment is within the tolerance zone. Hence, in this case, no complex software is needed. The image may alternatively be a graphic representation, allowing the user to quickly determine whether the light beam is within the tolerance zone.

According to a second aspect of the disclosure, an on-board wheel alignment system comprising the arrangement according to the first aspect is provided. The system further comprises a wheel adjustment device, wherein the sensor assembly is configured to send the collected sensor data to the wheel adjustment device, and wherein the wheel adjustment device is configured to:
- based on the received sensor data, determine whether the wheel alignment is outside of the tolerance zone;
- in response to determining that the wheel alignment is outside of the tolerance zone, adjust the wheel alignment based on the received sensor data.

The second aspect of the disclosure may seek to provide an in at least some aspect improved system for adjusting the wheel alignment of a vehicle. A technical benefit may include that an automated adjustment of the wheel alignment can be carried out as soon as a wheel misalignment occurs, without the need to visit a workshop.

Optionally in some examples, including in at least one preferred example, the sensor assembly is configured to repeatedly collect and send the sensor data to the wheel adjustment device during the adjustment of the wheel alignment, wherein the wheel adjustment device is configured to adjust the wheel alignment until it is within the tolerance zone. A technical benefit may include an efficient wheel alignment process.

Optionally in some examples, including in at least one preferred example, the wheel adjustment device is configured to adjust both a camber angle and a toe angle of the steerable wheel.

According to a third aspect of the disclosure, a vehicle comprising the arrangement according to the first aspect, or the wheel alignment system according to the second aspect, is provided. The vehicle may be a heavy-duty vehicle such as a bus or a truck.

According to a fourth aspect of the disclosure, a method for adjusting wheel alignment of a steerable wheel mounted on an axle of a vehicle is provided. The steerable wheel is mounted to the axle by means of a steering knuckle. The method comprises, using the on-board wheel alignment system according to the second aspect:
- detecting the pattern and collecting sensor data relating to the detected pattern by the sensor assembly,
- determining, based on the collected sensor data, whether the wheel alignment is outside of the tolerance zone,
- in response to determining that the wheel alignment is outside of the tolerance zone, adjusting the wheel alignment by the wheel adjustment device.

The fourth aspect of the disclosure may seek to provide an in at least some aspect improved method of adjusting the wheel alignment of a vehicle. A technical benefit may include that an accurate and automated wheel alignment process may be achieved, thus enabling a reduced vehicle downtime. Advantages and advantageous features of the fourth aspect largely correspond to those of the first and second aspects.

Optionally in some examples, including in at least one preferred example, the method comprises repeatedly collecting and sending the sensor data to the wheel adjustment device during the adjustment of the wheel alignment, and adjusting the wheel alignment until it is within the tolerance zone. A technical benefit may include an efficient and automated wheel alignment process.

Optionally in some examples, including in at least one preferred example, the method comprises adjusting the toe angle and/or the camber angle of the steerable wheel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of a vehicle according to an example.
**FIG. 2** is a schematic bottom view of a vehicle according to an example.
**FIG. 3** is a schematic front view of a vehicle according to an example.
**FIG. 4** schematically illustrates parts of a steerable wheel and an arrangement for determining wheel alignment according to an example.
**FIG. 5** schematically illustrates the arrangement for determining wheel alignment shown in FIG. 4 in greater detail.
**FIG. 6a** is a schematic front view of a sensor assembly according to an example.
**FIG. 6b** is a schematic planar view of a patten according to an example.
**FIG. 7** schematically illustrates an arrangement for determining wheel alignment according to an example.
**FIG. 8** schematically illustrates a system for adjusting wheel alignment according to an example.
**FIG. 9** is a flowchart illustrating a method according to an example of the disclosure.
**FIG. 10** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A proper wheel alignment of steerable wheels of a motor vehicle is important to avoid uneven tyre wear and the vehicle pulling to the side, as well as to keep the fuel consumption of the vehicle as low as possible. To maintain a good vehicle performance, the wheel alignment should be kept within a tolerance range. This may typically be checked using offboard equipment in a workshop.

The present disclosure aims to provide means for detecting that the vehicle alignment is off by using an onboard arrangement, i.e., without the need to visit a workshop. According to a first aspect of the disclosure, this is achieved by an on-board arrangement for determining the wheel alignment of a steerable wheel. The arrangement is only intended for use when the vehicle is not being steered, i.e., for calibration purposes. The present disclosure further aims to provide means for adjusting the wheel alignment if it is detected that the wheel alignment is outside of a defined tolerance zone. According to a second aspect of the disclosure, this is achieved by an on-board wheel alignment system.

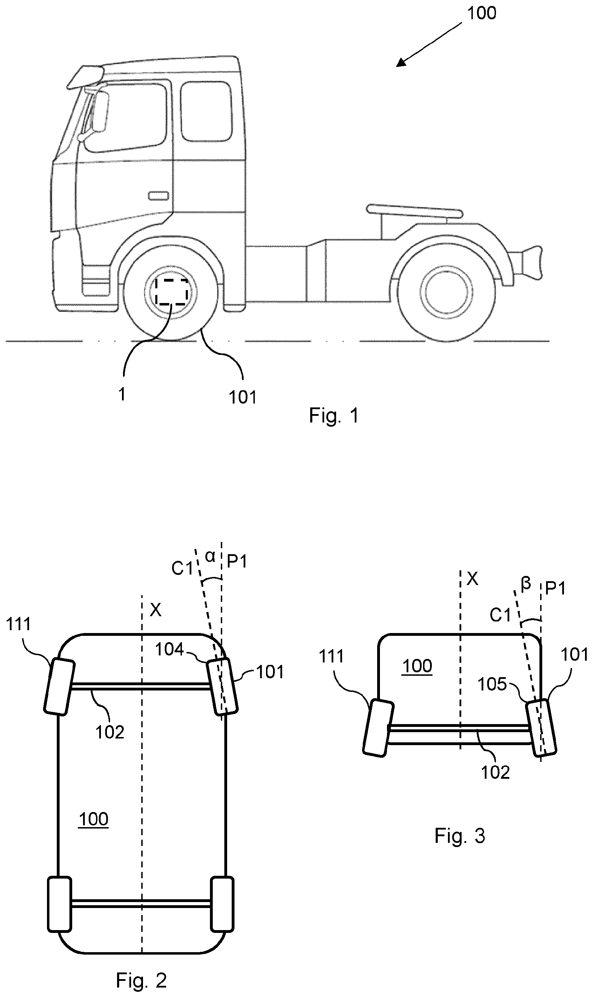

**FIG. 1** illustrates a vehicle 100 in the form of a heavy-duty towing truck comprising a steerable wheel 101 and an on-board arrangement 1 for determining wheel alignment of the steerable wheel 101 when the vehicle 100 is standing still, i.e., when the wheel 101 is not being steered. Although the vehicle 1 is herein illustrated in the form of a truck, it may be any other motor vehicle comprising a steerable wheel, such as a passenger car, a bus, a working machine, etc.

**FIG. 2** schematically illustrates the vehicle 100 in a bottom view, comprising a first steerable wheel 101 and a second steerable wheel 111, both wheels 101, 111 being mounted to an axle 102 of the vehicle 100, herein a front axle, by means of a steering knuckle (not shown in FIG. 2). The axle 102 is a steered axle, that can be a driven or a non-driven axle depending on the vehicle configuration. Most commonly, the axle 102 would be a non-driven axle. FIG. 2 illustrates that the first steerable wheel 101 is mounted to the axle 102 with a toe angle α, herein a so-called toe in, or a positive toe, i.e., a front end 104 of the wheel 101 points in toward a vertical centre plane X of the vehicle 100. The toe angle α is the angle between a centre plane C1 of the first steerable wheel 101 and a plane P1 perpendicular to a longitudinal axis of the axle 102, as seen in the bottom view.

**FIG. 3** schematically illustrates the vehicle 100 in a front view. The first steerable wheel 101 is mounted to the axle 102 with a camber angle β. The camber angle β is herein negative, i.e., an upper end 105 of the wheel 101 points in toward the vertical centre plane X. The camber angle β is the angle between the centre plane C1 of the first steerable wheel 101 and the plane P1, as seen in the front view.

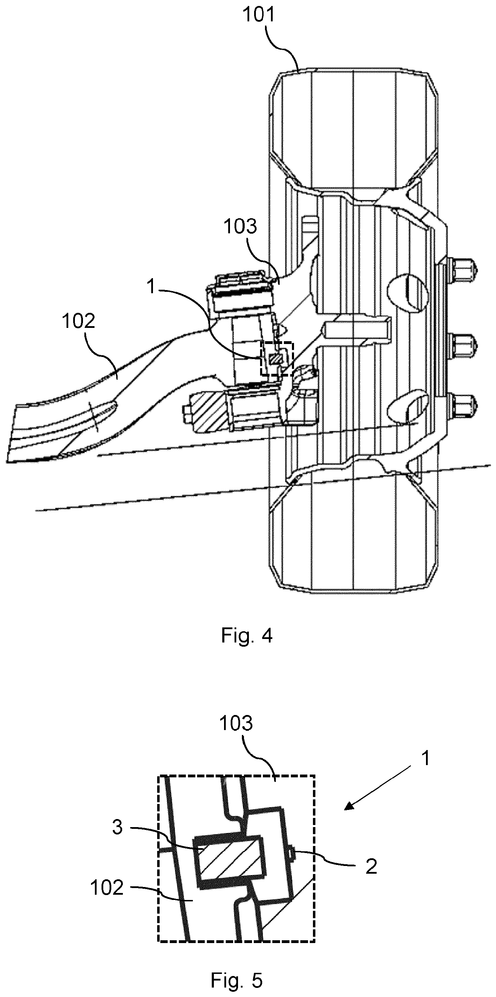

**FIG. 4** illustrates an on-board arrangement 1 for determining wheel alignment of a steerable wheel 101 mounted on an axle 102 of a vehicle 100, such as on the front axle 102 of the vehicle 100 illustrated in FIGS. 1-3. The steerable wheel 101, illustrated only in part, is mounted to the axle 102 by means of a steering knuckle 103.

**FIG. 5** illustrates the arrangement 1 in an enlarged view. The arrangement 1 comprises a pattern 2 provided on a first one of the steering knuckle 103 and the axle 102, herein on the steering knuckle 103. The pattern defines a tolerance zone for wheel alignment of the steerable wheel 101, such as for alignment of the toe angle α and the camber angle β. The arrangement 1 further comprises a sensor assembly 3 mounted on a second one of the steering knuckle 103 and the axle 102. In the shown example, the sensor assembly 3 is fixedly attached to the axle 102. The sensor assembly 3 is configured to detect the pattern 2 and collect sensor data relating to the detected pattern 2, wherein the collected sensor data are indicative of whether the wheel alignment is within the tolerance zone.

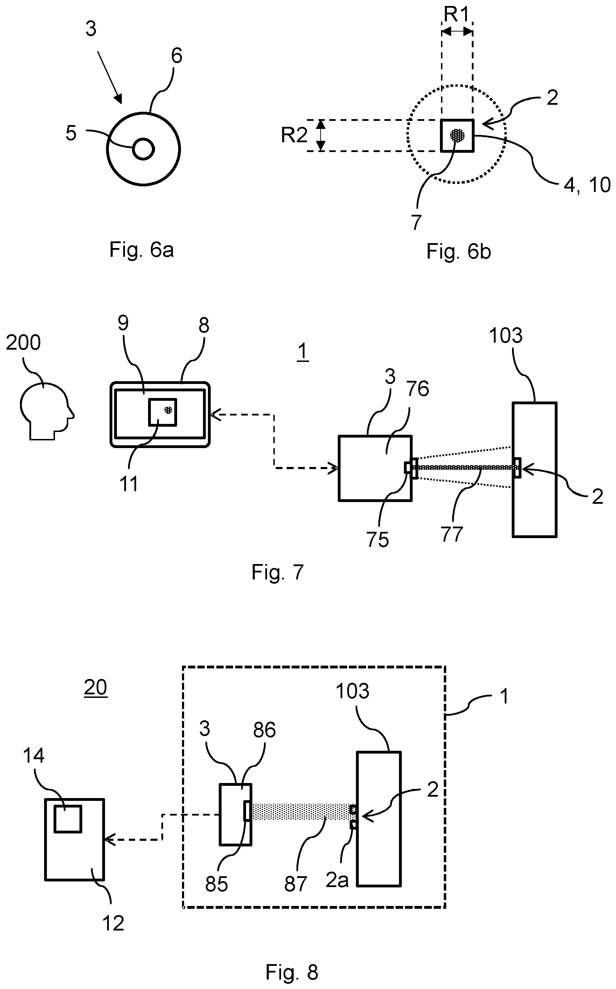

**FIGS. 6a** and **6b** illustrate an example of the sensor assembly 3 in a front view, and an example of the pattern 2, respectively. The sensor assembly 3 herein comprises an emitter 5 configured to emit an electromagnetic radiation beam 7 toward the pattern 2, and a detector 6 configured to collect the sensor data by detecting a return signal arising as the electromagnetic radiation beam 7 interacts with the pattern 2. The pattern 2 has an outer border 10 that defines a tolerance zone 4. The tolerance zone 4 herein defines a first tolerance range R1 for the toe angle α and a second tolerance range R2 for the camber angle β. When the radiation beam 7 is within the tolerance zone 4 defined by the outer border 10, this is an indication that the toe angle α is within the first tolerance range R1 and that the camber angle β is within the second tolerance range R2. The dotted line in FIG. 6b indicates a field of view of the detector 6.

**FIG. 7** illustrates an example of the arrangement 1 in which the sensor assembly 3 comprises an emitter in the form of a pointer 75, such as a laser pointer, configured to project a light beam 77 onto the pattern 2 provided on the steering knuckle 103. The sensor assembly 3 further comprises a detector in the form of a camera 76 configured to collect the sensor data by capturing at least one image of the pattern 2 and the projected light beam 77. A field of view of the camera 76 is indicated with dotted lines, wherein the pattern 2 is centered within the field of view of the camera 76 when the wheel 101 is aligned. The pattern 2 is in this example a visual pattern comprising an outer border 10, such as illustrated in FIG. 6b. The sensor data is indicative of the wheel alignment being within the tolerance zone 4 when the projected light beam 77 is within the outer border 10. When the wheel 101 is misaligned, the light beam 77 will be projected outside of the outer border 10.

The arrangement 1 illustrated in FIG. 7 further comprises a user interface 8 configured to present information relating to the collected sensor data to a user 200. The user interface 8 herein comprises a display 9 configured to present the information as an image 11 of the detected pattern 2 and the light beam 77 projected onto the pattern 2. The image may be the image captured by the camera 76, or a graphic representation of the light beam 77 projected onto the pattern 2. In this case, the user 200 may easily see whether the light beam 77 is projected within the outer border 10, indicating that the wheel alignment is within the tolerance zone 4, or not. In other examples, the display 9 may be configured to present the information as a message, wherein the arrangement 1 may comprise an electronic control unit (not shown) configured to determine, e.g., the toe angle α and/or the camber angle β based on the position of the projected beam with respect to the tolerance zone 4 and display data relating to the determined angles to the user 200. The user interface 8 may additionally, or alternatively, be configured to provide a short message to the user 200, such as "wheel alignment OK" or similar, and/or to provide a warning signal when the wheel alignment is outside of the tolerance zone 4. The user interface 8 may be configured for visual and/or audial presentation of information to the user 200.

The arrangement 1 described herein may also be configured such that it can be used to determine whether a total steering angle of the steerable wheel 101 is within predefined limits, such as whether a total steering range of the steerable wheel 101 as measured from an extreme first position to an extreme second position of the steerable wheel is within predefined limits. For example, it can be configured such that it can be detected whether maximum steering angles for right- and left turns, respectively, are within predefined limits. This may be determined when the steerable wheel 101 is turned to its respective extreme positions.

**FIG. 8** illustrates an on-board wheel alignment system 20 comprising the arrangement 1 according to an example of the disclosure. In this example, the sensor assembly 3 of the arrangement 1 comprises a detector in the form of a proximity sensor 86 configured to detect the pattern 2 and collect sensor data relating to the detected pattern 2. The proximity sensor 86 may be any kind of suitable proximity sensor, such as an inductive or capacitive proximity sensor, an infrared proximity sensor, or an ultrasonic proximity sensor. In the illustrated embodiment, the proximity sensor 86 comprises an emitter 85 configured to emit an electromagnetic radiation beam 87, such as an infrared beam, toward the pattern 2.

The pattern 2 is in this example a three-dimensional pattern that enables detection of the tolerance zone 4 by the proximity sensor 86. The pattern 2 may comprise at least one serration (not shown) and/or at least one protrusion 2a defining an outer border 10 of the tolerance zone 2. In the illustrated example, protrusions 2a arranged on the steering knuckle 103 are used to define the outer border 10 and the emitter 85 is configured to emit the radiation beam 87 onto the pattern 2.

The wheel alignment system 20 further comprises a wheel adjustment device 12. Of course, such a wheel adjustment device 12 may be provided together with an arrangement 1 for determining wheel alignment according to any other example of the disclosure and is not limited for use with an arrangement 1 comprising a proximity sensor 85.

The sensor assembly 3 is configured to send the collected sensor data to the wheel adjustment device 12. The wheel adjustment device 12 is configured to, based on the received sensor data, determine whether the wheel alignment is outside of the tolerance zone 4. The wheel adjustment device 12 is further configured to, in response to determining that the wheel alignment is outside of the tolerance zone 4, adjust the wheel alignment based on the received sensor data. The wheel adjustment device 12 may comprise an electronic control unit 14 comprising processing circuitry configured to determine whether the wheel alignment is outside of the tolerance zone 4, and a mechanical adjustment arrangement, using a link rod or similar, for physically adjusting the wheel alignment based on control signals from the electronic control unit 14, e.g. using an electric motor, hydraulics or pneumatics driving the mechanical adjustment arrangement.

The sensor assembly 3 may be configured to repeatedly collect and send the sensor data to the wheel adjustment device 12 during the adjustment of the wheel alignment. The wheel adjustment device 12 may be configured to adjust the wheel alignment until it is within the tolerance zone 4, using the repeatedly received data from the sensor assembly 3.

The wheel alignment system 20 may be provided on the vehicle 100 as illustrated in any one of FIGS. 1-3.

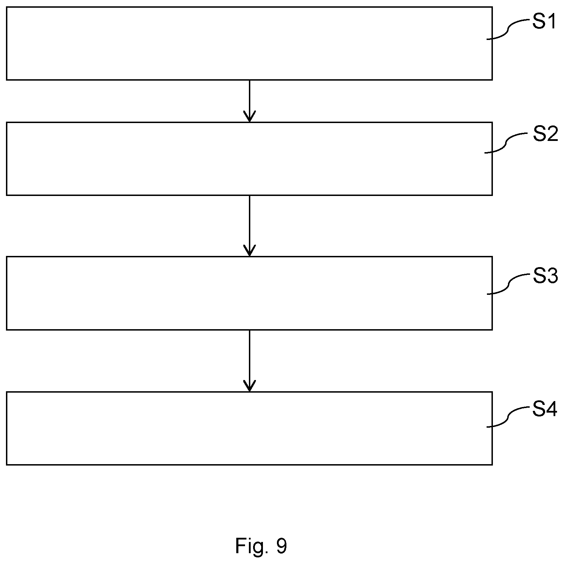

**FIG. 9** illustrates a method for adjusting wheel alignment of a steerable wheel 101 mounted on an axle 102 of a vehicle 100 according to an example of the disclosure. The steerable wheel 101 is mounted to the axle 102 by means of a steering knuckle 103. The method uses the on-board wheel alignment system 20 described above, such as illustrated in FIG. 8, wherein the arrangement 1 for determining wheel alignment may be according to any one of the examples according to the disclosure. The method comprises the following actions:
**Action S1:** Detecting the pattern 2 by the sensor assembly 3.
**Action S2:** Collecting sensor data relating to the detected pattern 2 by the sensor assembly 3.
**Action S3:** Determining, based on the collected sensor data, whether the wheel alignment is outside of the tolerance zone 4. This action may be performed by the electronic control unit 14 of the wheel adjustment device 12.
**Action S4:** In response to determining that the wheel alignment is outside of the tolerance zone 4, adjusting the wheel alignment.

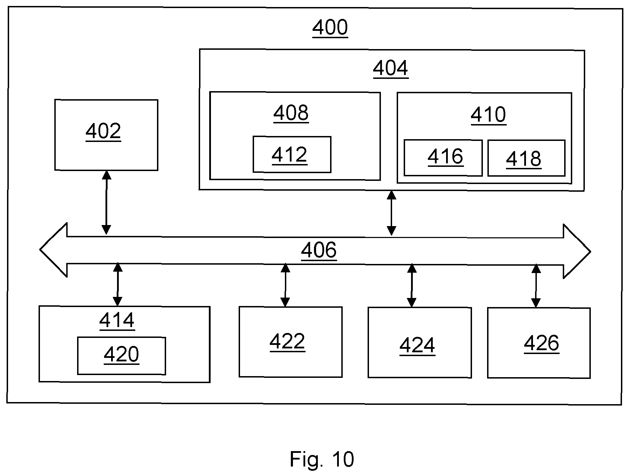

**FIG. 10** is a schematic diagram of a computer system **400** for implementing examples disclosed herein, such as for determining the wheel alignment and/or for controlling wheel adjustment in response to the determined wheel alignment. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An on-board arrangement (1) for determining wheel alignment of a steerable wheel (101) mounted on an axle (102) of a vehicle (100), wherein the steerable wheel (101) is mounted to the axle (102) by means of a steering knuckle (103), the arrangement (1) comprising:
- a pattern (2) provided on a first one of the steering knuckle (103) and the axle (102), wherein the pattern (2) defines a tolerance zone (4) for wheel alignment of the steerable wheel (101),
- a sensor assembly (3) mounted on a second one of the steering knuckle (103) and the axle (102), the sensor assembly (3) being configured to detect the pattern (2) and collect sensor data relating to the detected pattern (2), wherein the collected sensor data are indicative of whether the wheel alignment is within the tolerance zone (4).

2. The arrangement according to claim 1, wherein the sensor assembly (3) is mounted on the axle (102) and the pattern (2) is provided on the steering knuckle (103).

3. The arrangement according to claim 1 or 2, wherein the sensor assembly (3) comprises an emitter (5) configured to emit an electromagnetic radiation beam (7) toward the pattern (2), and a detector (6) configured to collect the sensor data by detecting a return signal arising as the electromagnetic radiation beam interacts with the pattern (2).

4. The arrangement according to any one of the preceding claims, wherein the sensor assembly comprises a pointer (75) configured to project a light beam (77) onto the pattern (2), and a camera (76) configured to collect the sensor data by capturing at least one image of the pattern (2) and the projected light beam (77).

5. The arrangement according to claim 4, wherein the pointer (75) is a laser pointer.

6. The arrangement according to claim 4 or 5, wherein the pattern (2) is a visual pattern comprising an outer border (10), and wherein the sensor data is indicative of the wheel alignment being within the tolerance zone (4) when the projected light beam (77) is within the outer border (10).

7. The arrangement according to any one of claims 1-3, wherein the sensor assembly (3) comprises a proximity sensor (86) configured to detect the pattern (2) and collect sensor data relating to the detected pattern (2), and wherein the pattern (2) is a three-dimensional pattern that enables detection of the tolerance zone (4) by the proximity sensor (86).

8. The arrangement according to claim 7, wherein the pattern (2) comprises at least one serration and/or at least one protrusion (2a) defining an outer border (10) of the tolerance zone (4).

9. The arrangement according to any one of the preceding claims, wherein the tolerance zone (4) defines at least one of a first tolerance range (R1) for a toe angle (α) and a second tolerance range (R2) for a camber angle (β).

10. The arrangement according to any one of the preceding claims, further comprising a user interface (8) configured to present information relating to the collected sensor data to a user (200).

11. The arrangement according to claim 10 when dependent on any one of claims 4-6, wherein the user interface (8) comprises a display (9) configured to present the information as an image (11) of the detected pattern (2) and the light beam (77) projected onto the pattern (2).

12. An on-board wheel alignment system (20) comprising the arrangement (1) according to any one of the preceding claims, and further comprising a wheel adjustment device (12), wherein the sensor assembly (3) is configured to send the collected sensor data to the wheel adjustment device, and wherein the wheel adjustment device (12) is configured to:
- based on the received sensor data, determine whether the wheel alignment is outside of the tolerance zone (4);
- in response to determining that the wheel alignment is outside of the tolerance zone (4), adjust the wheel alignment based on the received sensor data.

13. The wheel alignment system according to claim 12, wherein the sensor assembly (3) is configured to repeatedly collect and send the sensor data to the wheel adjustment device (12) during the adjustment of the wheel alignment, and wherein the wheel adjustment device (12) is configured to adjust the wheel alignment until it is within the tolerance zone (4).

14. A vehicle (100) comprising the arrangement (1) according to any one of claims 1-11, or the wheel alignment system (20) according to claim 12 or 13.

15. A method for adjusting wheel alignment of a steerable wheel (101) mounted on an axle (102) of a vehicle (100), wherein the steerable wheel (101) is mounted to the axle (102) by means of a steering knuckle (103), the method comprising, using the on-board wheel alignment system (20) according to claim 12 or 13:
- detecting (S1) the pattern (2) and collecting (S2) sensor data relating to the detected pattern (2) by the sensor assembly (3),
- determining (S3), based on the collected sensor data, whether the wheel alignment is outside of the tolerance zone (4),
- in response to determining that the wheel alignment is outside of the tolerance zone (4), adjusting (S4) the wheel alignment.

## Patentansprüche

1. An Bord integrierte Anordnung (1) zum Bestimmen der Radausrichtung eines lenkbaren Rads (101), das an einer Achse (102) eines Fahrzeugs (100) montiert ist, wobei das lenkbare Rad (101) mittels eines Achsschenkels (103) an der Achse (102) montiert ist, wobei die Anordnung (1) Folgendes umfasst:
- ein Muster (2), das an einem ersten von dem Achsschenkel (103) und der Achse (102) vorgesehen ist, wobei das Muster (2) eine Toleranzzone (4) für die Radausrichtung des lenkbaren Rads (101) definiert,
- eine Sensorbaugruppe (3), die an einem zweiten von dem Achsschenkel (103) und der Achse (102) vorgesehen ist, wobei die Sensorbaugruppe (3) dazu konfiguriert ist, das Muster (2) zu detektieren und Sensordaten bezüglich des detektierten Musters (2) zu erfassen, wobei die erfassten Sensordaten anzeigen, ob die Radausrichtung innerhalb der Toleranzzone (4) liegt.

2. Anordnung nach Anspruch 1, wobei die Sensorbaugruppe (3) an der Achse (102) montiert ist und das Muster (2) am Achsschenkel (103) vorgesehen ist.

3. Anordnung nach Anspruch 1 oder 2, wobei die Sensorbaugruppe (3) einen Sender (5), der dazu konfiguriert ist, einen elektromagnetischen Strahl (7) in Richtung des Musters (2) auszusenden, und einen Detektor (6) umfasst, der dazu konfiguriert ist, die Sensordaten zu erfassen, indem er ein Rücklaufsignal detektiert, das entsteht, wenn der elektromagnetische Strahl mit dem Muster (2) interagiert.

4. Anordnung nach einem der vorhergehenden Ansprüche, wobei die Sensorbaugruppe einen Zeiger (75), der dazu konfiguriert ist, einen Lichtstrahl (77) auf das Muster (2) zu projizieren, und eine Kamera (76) umfasst, die dazu konfiguriert ist, die Sensordaten zu erfassen, indem sie mindestens ein Bild des Musters (2) und des projizierten Lichtstrahls (77) aufnimmt.

5. Anordnung nach Anspruch 4, wobei der Zeiger (75) ein Laser-Zeiger ist.

6. Anordnung nach Anspruch 4 oder 5, wobei das Muster (2) ein visuelles Muster ist, das eine äußere Begrenzung (10) umfasst, und wobei die Sensordaten anzeigen, dass die Radausrichtung innerhalb der Toleranzzone (4) liegt, wenn sich der projizierte Lichtstrahl (77) innerhalb der äußeren Begrenzung (10) befindet.

7. Anordnung nach einem der Ansprüche 1-3, wobei die Sensorbaugruppe (3) einen Näherungssensor (86) umfasst, der dazu konfiguriert ist, das Muster (2) zu detektieren und Sensordaten bezüglich des detektierten Musters (2) zu erfassen, und wobei das Muster (2) ein dreidimensionales Muster ist, das die Detektion der Toleranzzone (4) durch den Näherungssensor (86) ermöglicht.

8. Anordnung nach Anspruch 7, wobei das Muster (2) mindestens eine Riffelung und/oder mindestens einen Vorsprung (2a) umfasst, die bzw. der eine äußere Begrenzung (10) der Toleranzzone (4) definiert.

9. Anordnung nach einem der vorhergehenden Ansprüche, wobei die Toleranzzone (4) mindestens einen ersten Toleranzbereich (R1) für einen Spurwinkel (α) und/oder einen zweiten Toleranzbereich (R2) für einen Sturzwinkel (β) definiert.

10. Anordnung nach einem der vorhergehenden Ansprüche, die ferner eine Benutzeroberfläche (8) umfasst, die dazu konfiguriert ist, einem Benutzer (200) Informationen bezüglich der erfassten Sensordaten darzustellen.

11. Anordnung nach Anspruch 10, wenn von einem der Ansprüche 4-6 abhängig, wobei die Benutzeroberfläche (8) eine Anzeige (9) umfasst, die dazu konfiguriert ist, die Informationen als Bild (11) des detektierten Musters (2) und des auf das Muster (2) projizierten Lichtstrahls (77) darzustellen.

12. An Bord integriertes Radausrichtungssystem (20), das die Anordnung (1) nach einem der vorhergehenden Ansprüche umfasst und ferner eine Radausrichtungsvorrichtung (12) umfasst, wobei die Sensorbaugruppe (3) dazu konfiguriert ist, die erfassten Sensordaten an die Radausrichtungsvorrichtung zu senden, und wobei die Radausrichtungsvorrichtung (12) für Folgendes konfiguriert ist:
- Bestimmen, ob die Radausrichtung außerhalb der Toleranzzone (4) liegt, basierend auf den empfangenen Sensordaten;
- als Reaktion auf das Bestimmen, dass die Radausrichtung außerhalb der Toleranzzone (4) liegt, Anpassen der Radausrichtung basierend auf den empfangenen Sensordaten.

13. Radausrichtungssystem nach Anspruch 12, wobei die Sensorbaugruppe (3) dazu konfiguriert ist, während der Anpassung der Radausrichtung wiederholt die Sensordaten zu erfassen und an die Radausrichtungsvorrichtung (12) zu senden, und wobei die Radausrichtungsvorrichtung (12) dazu konfiguriert ist, die Radausrichtung so lange anzupassen, bis sie innerhalb der Toleranzzone (4) liegt.

14. Fahrzeug (100), das die Anordnung (1) nach einem der Ansprüche 1-11 oder das Radausrichtungssystem (20) nach Anspruch 12 oder 13 umfasst.

15. Verfahren zum Anpassen der Radausrichtung eines lenkbaren Rads (101), das an einer Achse (102) eines Fahrzeugs (100) montiert ist, wobei das lenkbare Rad (101) mittels eines Achsschenkels (103) an der Achse (102) montiert ist, wobei das Verfahren unter Verwendung des an Bord integrierten Radausrichtungssystems (20) nach Anspruch 12 oder 13 Folgendes umfasst:
- Detektieren (S1) des Musters (2) und Erfassen (S2) von Sensordaten bezüglich des detektierten Musters (2) durch die Sensorbaugruppe (3),
- Bestimmen (S3), ob die Radausrichtung außerhalb der Toleranzzone (4) liegt, basierend auf den erfassten Sensordaten,
- als Reaktion auf das Bestimmen, dass die Radausrichtung außerhalb der Toleranzzone (4) liegt, Anpassen (S4) der Radausrichtung.

## Revendications

1. Agencement embarqué (1) pour déterminer l'alignement des roues d'une roue directrice (101) montée sur un essieu (102) d'un véhicule (100), dans lequel la roue directrice (101) est montée sur l'essieu (102) au moyen d'un porte-fusée de direction (103), l'agencement (1) comprenant :
- un motif (2) prévu sur un premier élément parmi le porte-fusée (103) et l'essieu (102), le motif (2) définissant une zone de tolérance (4) pour l'alignement de la roue directrice (101),
- un ensemble capteur (3) monté sur un second élément parmi le porte-fusée de direction (103) et l'essieu (102), l'ensemble capteur (3) étant configuré pour détecter le motif (2) et collecter des données de capteur relatives au motif détecté (2), les données de capteur collectées indiquant si l'alignement des roues est dans la zone de tolérance (4).

2. Agencement selon la revendication 1, dans lequel l'ensemble capteur (3) est monté sur l'essieu (102) et le motif (2) est prévu sur le porte-fusée de direction (103).

3. Agencement selon la revendication 1 ou 2, dans lequel l'ensemble capteur (3) comprend un émetteur (5) configuré pour émettre un faisceau de rayonnement électromagnétique (7) vers le motif (2), et un détecteur (6) configuré pour collecter les données de capteur en détectant un signal de retour apparaissant lorsque le faisceau de rayonnement électromagnétique interagit avec le motif (2).

4. Agencement selon l'une quelconque des revendications précédentes, dans lequel l'ensemble capteur comprend un pointeur (75) configuré pour projeter un faisceau lumineux (77) sur le motif (2), et une caméra (76) configurée pour collecter les données de capteur en capturant au moins une image du motif (2) et le faisceau lumineux projeté (77).

5. Agencement selon la revendication 4, dans lequel le pointeur (75) est un pointeur laser.

6. Agencement selon la revendication 4 ou 5, dans lequel le motif (2) est un motif visuel comprenant une bordure extérieure (10), et les données de capteur indiquent que l'alignement des roues se trouve à l'intérieur de la zone de tolérance (4) lorsque le faisceau lumineux projeté (77) se trouve à l'intérieur de la bordure extérieure (10).

7. Agencement selon l'une quelconque des revendications 1 à 3, dans lequel l'ensemble capteur (3) comprend un capteur de proximité (86) configuré pour détecter le motif (2) et collecter des données de capteur relatives au motif détecté (2), et le motif (2) est un motif tridimensionnel qui permet la détection de la zone de tolérance (4) par le capteur de proximité (86).

8. Agencement selon la revendication 7, dans lequel le motif (2) comprend au moins une dentelure et/ou au moins une saillie (2a) définissant un bord extérieur (10) de la zone de tolérance (4).

9. Agencement selon l'une quelconque des revendications précédentes, dans lequel la zone de tolérance (4) définit au moins l'une d'une première plage de tolérance (R1) pour un angle de pincement (α) et d'une seconde plage de tolérance (R2) pour un angle de carrossage (β).

10. Agencement selon l'une quelconque des revendications précédentes, comprenant en outre une interface utilisateur (8) configurée pour présenter des informations concernant les données de capteur collectées à un utilisateur (200).

11. Agencement selon la revendication 10 lorsqu'elle dépend de l'une quelconque des revendications 4 à 6, dans lequel l'interface utilisateur (8) comprend un affichage (9) configuré pour présenter les informations sous la forme d'une image (11) du motif détecté (2) et du faisceau lumineux (77) projeté sur le motif (2).

12. Système embarqué d'alignement de roues (20) comprenant l'agencement (1) selon l'une quelconque des revendications précédentes, et comprenant en outre un dispositif d'ajustement de roues (12), dans lequel l'ensemble capteur (3) est configuré pour envoyer les données de capteur collectées au dispositif d'ajustement de roues, et dans lequel le dispositif d'ajustement de roue (12) est configuré pour :
- en fonction des données du capteur reçues, déterminer si le parallélisme des roues est en dehors de la zone de tolérance (4) ;
- en réponse à la détermination que le parallélisme des roues est en dehors de la zone de tolérance (4), régler le parallélisme des roues en fonction des données de capteur reçues.

13. Système d'alignement de roues selon la revendication 12, dans lequel l'ensemble capteur (3) est configuré pour collecter et envoyer de manière répétée les données de capteur au dispositif d'ajustement de roues (12) pendant l'ajustement de l'alignement de roues, et le dispositif d'ajustement de roues (12) est configuré pour ajuster l'alignement de roues jusqu'à ce qu'il se trouve dans la zone de tolérance (4).

14. Véhicule (100) comprenant l'agencement (1) selon l'une quelconque des revendications 1 à 11, ou le système d'alignement de roues (20) selon la revendication 12 ou 13.

15. Procédé de réglage de l'alignement des roues d'une roue directrice (101) montée sur un essieu (102) d'un véhicule (100), dans lequel la roue directrice (101) est montée sur l'essieu (102) au moyen d'un porte-fusée de direction (103), le procédé comprenant, en utilisant le système embarqué d'alignement des roues (20) selon la revendication 12 ou 13 :
- la détection (S1) du motif (2) et la collecte (S2) des données de capteur relatives au motif détecté (2) par l'ensemble capteur (3),
- la détermination (S3), sur la base des données recueillies par les capteurs, si le parallélisme des roues est en dehors de la zone de tolérance (4),
- en réponse à la détermination que le parallélisme des roues est en dehors de la zone de tolérance (4), le réglage (S4) du parallélisme des roues.
